(19) Europäisches Patentamt
European Patent Office
Office européen des brevets

(11) EP 2 539 398 B2

(12) NEW EUROPEAN PATENT SPECIFICATION
After opposition procedure

(45) Date of publication and mention of the opposition decision:
**24.07.2019 Bulletin 2019/30**

(45) Mention of the grant of the patent:
**15.10.2014 Bulletin 2014/42**

(21) Application number: **11702207.9**

(22) Date of filing: **03.02.2011**

(51) Int Cl.:
***C08L 23/10*** *(2006.01)*

(86) International application number:
**PCT/EP2011/051611**

(87) International publication number:
**WO 2011/104100 (01.09.2011 Gazette 2011/35)**

# (54) Random propylene copolymers for pipes

Random-Propylencopolymere für Rohre

Copolymères en propylène aléatoire pour tuyaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 EP 10154781**

(43) Date of publication of application:
**02.01.2013 Bulletin 2013/01**

(73) Proprietor: **Borealis AG**
**1220 Vienna (AT)**

(72) Inventors:
- **BERGSTRA, Michiel**
**FI-00810 Helsinki (FI)**
- **MALM, Bo**
**FI-02110 Espoo (FI)**
- **LESKINEN, Pauli**
**FI-00700 Helsinki (FI)**
- **KOCK, Cornelia**
**A-4055 Pucking (AT)**
- **SUNDHOLM, Tua**
**AT-4020 Linz (AT)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 0 887 379 EP-A1- 1 724 289**
**US-B1- 6 221 974**



Printed by Jouve, 75001 PARIS (FR)

## Description

The present invention is directed to a new random propylene copolymer, its process and pipes made from that random propylene copolymer.

Propylene polymers have many characteristics which make them suitable for many applications as for instance pipes, like pressure pipes, i.e. hot water and industrial pipes, i.e. for the transport of liquid, e.g. water, during which the fluid can be pressurized. Moreover, the transported fluid may have varying temperatures, usually within the temperature range of about 0 to about 70 °C. The good properties at high temperature of polypropylene compared to other polyolefins are often utilized for pipe applications but also for cable applications. All three main types of propylene polymers, i.e. homopolymers, random copolymers and block copolymers (i.e. heterophasic copolymers) are used.

The European patent application EP 1 724 289 A1 refers to high melt flow polymers of improved durability for pipe applications and a process for the preparation of a polymer composition.

The patent US 6,221,974 B1 discloses a process for the production of a creep-resistant polypropylene.

In general, polypropylene-based materials to be chosen for pipe applications should result in products having balanced properties in view of pressure test performance, temperature resistance, impact performance and stiffness. However, these properties are interrelated to each other and very often behave in a conflicting manner, i.e. improving a specific property can only be accomplished on the expense of another property.

Stiffness can be improved by increasing the amount of homopolymer within the composition. As a consequence, the material becomes more brittle, thereby resulting in poor impact properties. Furthermore, high brittleness is usually accompanied by lower resistance to slow crack growth, thereby having a detrimental effect on durability. Thus many efforts have been undertaken to provide pipes which are characterized by a high stiffness and temperature resistance. However to date it was impossible to improve stiffness and temperature resistance without deteriorating other important properties of the pipe, like the pressure test performance or the impact strength of the pipe.

Thus the object of the present invention is to provide a polypropylene which enables the preparation of pipes with an excellent stiffness and temperature resistance by keeping the pressure test performance as well as the impact strength on high levels. Moreover the present invention is directed to pipes with the aforesaid properties.

The finding of the present invention is to provide a polypropylene comprising three different polypropylenes fractions, wherein at least one fraction must be a random propylene copolymer and at least another fraction must be a propylene homopolymer or a random propylene copolymer with low comonomer content, i.e. below 1.5 wt.%.

Thus the present invention is directed to a random propylene copolymer (R-PP) comprising

(a) 15 to 35 wt.-% of a first polypropylene (PP1) being a first random propylene copolymer (R-PP1), said first random propylene copolymer (R-PP1) has a comonomer content in the range of 2.5 to 12 wt.-% and a melt flow rate $MFR_{10}$ (230°C) measured according to ISO 1133 of not more than 1.5 g/10min,
(b) 55 to 75 wt.-% of a second polypropylene (PP2) being a first propylene homopolymer (H-PP1) or a second random propylene copolymer (R-PP2), said second polypropylene (PP2) has a comonomer content of not more than 5.0 wt.-%,
(c) 5 to 25 wt.-% of a third polypropylene (PP3) being a second propylene homopolymer (H-PP2) or a third random propylene copolymer (R-PP3), said third random propylene copolymer (R-PP3) has a comonomer content of 0.5 to 3.5 wt.-%,

wherein further

(i) first polypropylene (PP1) differ from the second polypropylene (PP2) and the third polypropylene (PP3) by the melt flow rate $MFR_2$ (230°C) and/or by the comonomer content [wt.-%],
(ii) the second polypropylene (PP2) differ from the third polypropylene (PP3) by the melt flow rate $MFR_2$ (230°C) and/or by the comonomer content [wt.-%],
(iii) the random propylene copolymer (R-PP) has a melt flow rate $MFR_2$ (230°C) measured according to ISO 1133 of 0.05 to 10.00 g/10min, and
(iv) the random propylene copolymer (R-PP) has a comonomer content in the range of 1.5 to 10 wt.-%.

Preferably the first polypropylene (PP1), the second polypropylene (PP2) and the third polypropylene (PP3) differ from each other by the melt flow rate $MFR_2$ (230°C). Even more preferred the first polypropylene (PP1), the second polypropylene (PP2) and the third polypropylene (PP3) differ from each other by the melt flow rate $MFR_2$ (230°C) and the third polypropylene (PP3) has a lower comonomer content than the second polypropylene (PP2). In an especially preferred embodiement the first polypropylene (PP1), the second polypropylene (PP2) and the third polypropylene (PP3) differ from each other by the melt flow rate $MFR_2$ (230°C) and the first polypropylene (PP1) and the second polypropylene (PP2) are random propylene copolymers (first random propylene copolymer (R-PP1) and second random propylene

copolymer (R-PP2)) whereas the third polypropylene (PP3) is a second propylene homopolymer (H-PP2).

Preferably the random propylene copolymer (R-PP) as defined in the instant invention is obtainable, more preferably obtained, by a sequential polymerization process, in particular by a polymerization process as defined in detail below.

Preferably the first polypropylene (PP1), the second polypropylene (PP2) and the third polypropylene (PP3) are the only polymer components within the random propylene copolymer (R-PP).

It has surprisingly found that such a random propylene copolymer (R-PP) has good stiffness and impact performance as well as pressure test performance. Further the random propylene copolymer (R-PP) can be easily extruded and thus less pressure is needed during the converting (see examples).

In the following the invention is described in more detail.

Especially good results are achievable in case the properties of the three polypropylenes present in the random propylene copolymer (R-PP) are harmonized. Accordingly it is appreciated that the first polypropylene (PP1) has

(a) a lower melt flow rate $MFR_2$ (230°C) compared to the second polypropylene (PP2) and/or the third polypropylene (PP3),
and/or
(b) a higher comonomer content [wt.-%] compared to the second polypropylene (PP2) and/or the third polypropylene (PP3).

It is especially preferred that the first polypropylene (PP1) has the lowest melt flow rate $MFR_2$ (230°C) and/or the highest comonomer content [wt.-%] of the three polypropylenes PP1, PP2 and PP3 present within the random propylene copolymer (R-PP).

Further it has been recognized that especially good results are achievable in case either the second polypropylene (PP2) or third polypropylene (PP3) is a propylene homopolymer. Thus in one embodiment the second polypropylene (PP2) is a first propylene homopolymer (H-PP1) and the third polypropylene (PP3) is a third random propylene copolymer (R-PP3). In another embodiment, which is especially preferred, the second polypropylene (PP2) is a second random propylene copolymer (R-PP2) and the third polypropylene (PP3) is a second propylene homopolymer (H-PP2).

As stated above, the first polypropylene (PP1) is featured by its rather high molecular weight, i.e. by its low melt flow behavior. Thus to make the random propylene copolymer (R-PP) processable a fraction having a rather high melt flow rate is needed. Accordingly it is appreciated that either the second polypropylene (PP2) or the third polypropylene (PP3) has a melt flow rate $MFR_2$ (230°C) above 2.0 g/10min. In case the third polypropylene (PP3) is used as the low molecular weight component it is preferred that it has a melt flow rate $MFR_2$ (230°C) above 2.5 g/10min, i.e. above 4.0 g/10min.

A mandatory requirement is that the random propylene copolymer (R-PP) has a melt flow rate $MFR_2$ (230°C) measured according to ISO 1133 of 0.05 to 10.00 g/10min, more preferably in the range of 0.10 to 5.00 g/10min, like 0.20 to 2.00 g/10min.

As outlined above the random propylene copolymer (R-PP) shall be suitable as pipe material. Thus the final random propylene copolymer (R-PP) must comply with standards in this technical field. To achieve the requirements defined in the standards and on the other hand being processable it has been found out that the random propylene copolymer (R-PP) should have a shear thinning index SHI (0/50) measured according to ISO 6271-10 (200 °C) of at least 9, more preferably of at least 10, yet more preferably in the range of 9 to 35, still more preferably in the range of 10 to 30, like 10 to 15.

Alternatively or additionally the random propylene copolymer (R-PP) has a polydispersity index (PI) of at least 3.0, more preferably of at least 3.5, yet more preferably in the range of 3.0 to 10.0, still more preferably in the range of 3.3 to 8.0, like 3.5 to 7.0.

Preferably it is desired that the random propylene copolymer (R-PP) is thermally stable. Accordingly it is appreciated that the random propylene copolymer (R-PP) has a melting temperature of at least 145 °C, more preferably of at least 150 °C. In case especially high melting temperatures are desired the second polypropylene (PP2) or the third polypropylene (PP3) should be a propylene homopolymer (H-PP2). Therefore in case the random propylene copolymer (R-PP) comprises one fraction being a propylene homopolymer melting temperatures of at least 150 °C, preferably of at least 155 °C, like 160 °C are achievable. In one specific embodiment the random propylene copolymer (R-PP) has melting temperature above 158 °C and comprises a third polypropylene (PP3) being a second propylene homopolymer (H-PP2). This second propylene homopolymer (H-PP2) is preferably featured by a melt flow rate $MFR_2$ (230°C) above 4.0 g/10min, more preferably above 5.0 g/10min.

Further it is appreciated that the xylene soluble content of the random propylene copolymer (R-PP) is a rather low. Accordingly the random propylene copolymer (R-PP) has preferably a xylene cold soluble fraction (XCS) measured according to ISO 6427 (23 °C) of not more than 12.0 wt-%, more preferably of not more than 10.0 wt.-%, yet more preferably of not more than 8.0 wt.-%, like not more than 6.0 wt.-%.Thus a preferred range is 1.0 to 12.0 wt.-%, more

preferred 1.0 to 10.0 wt.-%, still more preferred 1.2 to 6.0 wt.-%.

The stepwise isothermal segregation technique (SIST) provides a possibility to determine the lamella thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae. Thus it is appreciated that the random propylene copolymer (R-PP) comprises at least 9 wt-%, more preferably at least 10 wt.-%, yet more preferably at least 11 wt.-%,still yet more preferably 10 to 18 wt.-%, like 11 to 16 wt.-%, of a crystalline fraction having a lamella thickness of more than 14.09 nm, wherein said fraction is determined by the stepwise isothermal segregation technique (SIST).

It is even more preferred that the random propylene copolymer (R-PP) comprises

(i) at least 9 wt-%, more preferably at least 10 wt.-%, yet more preferably at least 11 wt.-%, still yet more preferably 10 to 18 wt.-%, like 11 to 16 wt.-%, of a crystalline fraction having a lamella thickness of more than 14.09 nm, and
(ii) at least 9 wt-%, more preferably at least 25 wt.-%, yet more preferably at least 28 wt.-%, still yet more preferably 28 to 40 wt.-%, like 30 to 38 wt.-%, of a crystalline fraction having a lamella thickness in the range of 9.96 to 14.09 nm,

wherein said fraction is determined by the stepwise isothermal segregation technique (SIST).

The random propylene copolymer (R-PP) according to this invention is further preferably defined by its isotactic sequence length distribution.

The measurement of isotactic sequence length distribution is performed in the instant invention by using the temperature rising elution fraction (TREF) technique (the exact description is given in the experimental part), which fractionates propylene copolymers according to the solubility differences. It has been clearly demonstrated for propylene polymers that the temperature rising elution fraction (TREF) technique fractionates the propylene polymer according to the longest crystallisable sequences in the chain, which increases almost linearly with the elution temperature (P. Ville et al., Polymer 42 (2001) 1953-1967). Hence the higher the maximum temperature the longer are the isotactic sequences. The results further showed that the temperature rising elution fraction (TREF) technique does not strictly fractionate polypropylene according to tacticity but according to the longest crystallisable sequences in the chain. The solubility of a polypropylene polymer chain hence is influenced only by the concentration and distribution of sterical defects. Insofar the temperature rising elution fraction (TREF) technique is an appropriate method to characterize the inventive random propylene copolymer (R-PP) further.

Thus it is preferred that the temperature rising elution fractionation (TREF) curve of the random propylene copolymer (R-PP) has an absolute maximum over 110°, more preferably over 115°C, yet more preferably in the range of 110 to 125 °, like 115 to 120 °C.

In a specific embodiment the random propylene copolymer (R-PP) has a SIST profile and/or a TREF profile as defined above and additionally the third polypropylene (PP3) is second propylene homopolymer (H-PP2) whereas the second polypropylene (PP2) is a second random propylene copolymer (R-PP2).

Additionally it is appreciated that the random propylene copolymer (R-PP) has a comonomer content in the range of 1.5 to 10.0 wt.-%, preferably in the range of 2.0 to 8.0 wt.-%, more preferably in the range of 2.0 to 4.0 wt.-%.

Comonomers according to this invention are ethylene and $C_4$ to $C_{20}$ $\alpha$-olefins. Accordingly the term propylene copolymer according to this invention is understood as a polypropylene comprising units derivable from

(a) propylene
and
(b) ethylene and/or C4 to C20 $\alpha$-olefins.

Thus a propylene copolymer according to this invention comprises monomers copolymerizable with propylene, for example comonomers such as ethylene and/or $C_4$ to $C_{20}$ $\alpha$-olefins, in particular ethylene and/or $C_4$ to $C_{10}$ $\alpha$-olefins, e.g. 1-butene and/or 1-hexene. Preferably the propylene copolymers according to this invention comprises, especially consist of, monomers copolymerizable with propylene from the group consisting of ethylene, 1-butene and 1-hexene. More specifically the propylene copolymers of this invention comprises - apart from propylene - units derivable from ethylene and/or 1-butene. In a preferred embodiment the propylene copolymers according to this invention comprises units derivable from ethylene and propylene only. Still more preferably in all propylene copolymers, i.e. the first random propylene copolymer (R-PP1), the second random propylene copolymer (R-PP2) and the third propylene copolymer (R-PP3), present in the random propylene copolymer (R-PP) contain the same comonomers, like ethylene.

One further requirement in the present invention is that units derived from $C_2$ to $C_{20}$ $\alpha$-olefins other than propylene within the propylene copolymers are randomly distributed. The randomness indicates the amount of isolated comonomer units, i.e. those which have no other comonomer units in the neighbour, compared to the total amount of comonomers in the polymer chain. In a preferred embodiment, the randomness of the random propylene copolymers,

i.e. the randomness of the final random propylene copolymer (R-PP) but also of its individual fractions thereof, namely the first random propylene copolymer (R-PP1), the second random propylene copolymer (R-PP2) and the third propylene copolymer (R-PP3), is at least 30 %, more preferably at least 50 %, even more preferably at least 60 %, and still more preferably at least 65 %.

Preferably the random propylene copolymers are isotactic. Accordingly it is appreciated that the random propylene copolymer (R-PP) but also of its individual fractions thereof, namely the first polypropylene (PP1), the second polypropylene (PP2) and the third polypropylene (PP3), have a rather high pentad concentration, i.e. higher than 90 mol-%, more preferably higher than 92 mol-%, still more preferably higher than 93 mol-% and yet more preferably higher than 95 mol-%, like higher than 99 mol-%.

The inventive random propylene copolymer (R-PP) is further specified by the individual fractions being part of said copolymer.

As stated above the random propylene copolymer (R-PP) must comprise, more preferably consists of, three different polypropylenes. Thus in a preferred embodiment the random propylene copolymer may comprise further additives but no other polymers as the PP1, PP2, and PP3.The first polypropylene (PP1) is the first random propylene copolymer (R-PP1). A mandatory requirement of said first polypropylene (PP1) is that it has a high molecular weight. Accordingly the melt flow rate is rather low. It is especially preferred that the first polypropylene (PP1) is the fraction within the random propylene copolymer (R-PP) with the lowest melt flow rate. Thus it is preferred that the first polypropylene (PP1) being the first random propylene copolymer (R-PP1) has melt flow rate $MFR_{10}$ (230 C) measured according to ISO 1133 of not more than 1.5 g/10min, more preferably of not more than 1.0 g/10min, still more preferably in the range of 0.05 to 1.5 g/10min, yet more preferably in the range of 0.1 to 1.0 g/10min, like 0.3 to 1.0 g/10min.

Alternatively or additionally the first polypropylene (PP1) is defined by a high molecular weight. Thus it appreciated that the first polypropylene (PP1) has a weight average molecular weight (Mw) measured by gel permeation chromatography (GPC) of at least 500 kg/mol, more preferably of at least 550 kg/mol, yet more preferably in the range of 500 to 2000 kg/mol, still more preferably in the range of 550 to 1000 kg/mol.

Additionally it is appreciated that the first polypropylene (PP1) being the first random propylene copolymer (R-PP1) has a rather high comonomer content. In a preferred embodiment the first polypropylene (PP1) is the polymer fraction within the random propylene copolymer (R-PP) with the highest comonomer content. Thus the first polypropylene has a comonomer content of 2.5 to 12.0 wt.-%, more preferably 2.5 to 10.0 wt.-%,like 3.0 to 8.0 wt.-%.

The xylene cold soluble (XCS) content of the first polypropylene (PP1) being the random propylene copolymer (R-PP1) shall not exceed 15.0 wt.-%, like not more than 10.0 wt.%. On the other hand, as mentioned in the previous paragraph, the first polypropylene (PP1) has a rather high amount of comonomer content. As a consequence thereof also the xylene cold soluble (XCS) content of the first polypropylene (PP1) is comparatively high. Accordingly it is preferred that the xylene cold soluble (XCS) content of the first polypropylene (PP1) is in the range of 3.0 to 15.0 wt.-%, more preferably in the range of 4.0 to 10 wt.-%.

Different to the first polypropylene (PP1) which must be a random propylene copolymer (R-PP1), the second polypropylene (PP2) can be either a first propylene homopolymer (H-PP1) or a second random propylene copolymer (R-PP2). It is especially preferred that the second polypropylene (PP2) is a second random propylene copolymer (R-PP2). In any case the second polypropylene (PP2) differs from the first polypropylene (PP1) and third polypropylene (PP3) as indicated above.

Further it is preferred that the second polypropylene (PP2) has melt flow rate $MFR_2$ (230°C) measured according to ISO 1133 in the range of 0.04 to 20.00 g/10min, more preferably in the range of 0.4 to 20.00 g/10min, yet more preferably in the range of 0.4 to 10.0 g/10min, like 0.4 to 5.0 g 10min.

In one preferred embodiment the second polypropylene (PP2) has similar melt flow rate $MFR_2$ (230°C) as the final random propylene copolymer (R-PP). Preferably "similar" means that the melt flow rate $MFR_2$ (230°C) of the second polypropylene (PP2) differ from the final random propylene copolymer (R-PP) at most by +/- 1.0 g/10min, more preferably by +/- 0.5 g/10min.

On the other hand in case the final random propylene copolymer (R-PP) shall be featured by a broad molecular weight distribution, i.e. by a high shear thinning index SHI (0/50) and/or a high polydispersity index (PI), it is preferred that the second polypropylene (PP2) has a rather high melt flow rate, i.e. a melt flow rate $MFR_2$ (230°C) clearly above the melt flow rate $MFR_2$ (230°C) of the final random propylene copolymer (R-PP). Accordingly in case the random propylene copolymer (R-PP) has

(a) a shear thinning index SHI (0/50) measured according to ISO 6271-10 (200 °C) of at least 15, more preferably of at least 20, yet more preferably in the range of 15 to 35, still more preferably in the range of 20 to 30,
and/or
(b) a polydispersity index (PI) of at least 4.0, more preferably of at least 5.0, yet more preferably in the range of 4.0 to 12.0, still more preferably in the range of 5.0 to 10.0, like 5.5 to 9.0,

it is preferred that the second polypropylene (PP2) has a melt flow rate $MFR_2$ (230°C) measured according to ISO 1133 of at least 1.00 g/10min, more preferably in the range of 1.00 to 20.00 g/10min, yet more preferably in the range of 2.0 to 10.0 g/10min, still more preferably in the range of 2.0 to 5.0 g/10min.

Further it is appreciated that the second polypropylene (PP2) has preferably lower weight average molecular weight (Mw) compared to the first polypropylene (PP1). Thus it is appreciated that the second polypropylene (PP2) has weight average molecular weight (Mw) measured by Gel Permeation Chromatography (GPC) in the range of in the range of 150 to 550 kg/mol, more preferably in the range of 150 to 400 kg/mol.

The second polypropylene (PP2) can be a first propylene homopolymer (H-PP1) or a second random propylene copolymer (R-PP2). Preferably the comonomer content in the second polypropylene (PP2) is lower than in the first polypropylene (PP1). Accordingly the comonomer content of the second polypropylene (PP2) is up to 5.0 wt.-%.

The expression propylene homopolymer as used throughout the instant invention relates to a polypropylene that consists substantially, i.e. of more than 99.5 wt.-%, still more preferably of at least 99.7 wt.-%, like of at least 99.8 wt.-%, of propylene units. In a preferred embodiment only propylene units in the propylene homopolymer are detectable. The comonomer content can be determined with FT infrared spectroscopy, as described below in the example section.

In the case the second polypropylene (PP2) is a second random propylene copolymer (R-PP2) - an embodiment which is especially preferred - it is appreciated that the comonomer content is in the range of 0.5 to 5.0 wt.-%, more preferably in the range of 1.0 to 4.0 wt.-%.

The random propylene copolymer (R-PP) of the present invention can be further specified by the mixture of the first polypropylene (PP1) and the second polypropylene (PP2). Accordingly it is preferred that the mixture of the first polypropylene (PP1) and the second polypropylene (PP2) has a comonomer content in the range of 0.5 to 5.0 wt.-%, more preferably in the range of 2.0 to 4.5.

Depending on the specific end use of the final random propylene copolymer (R-PP), the molecular weight distribution of the mixture of the first polypropylene (PP1) and the second polypropylene (PP2) is adapted accordingly. Thus the mixture of the first polypropylene (PP1) and the second polypropylene (PP2) preferably has

(a) a shear thinning index SHI (0/50) measured according to ISO 6271-10 (200 °C) in the range of 10 to 35, more preferably in the range of 12 to 25,
and/or
(b) a polydispersity index (PI) in the range of 3.5 to 7.0, more preferably in the range of 4.0 to 6.5.

Further it is appreciated that the comonomer content of the mixture of the first polypropylene (PP1) and the second polypropylene (PP2) is in the range of 2.0 to 10.0 wt.-%, more preferably is in the range of 2.5 to 6.5 wt.-%.

Preferably the mixture of the first polypropylene (PP1) and the second polypropylene (PP2) has a melt flow rate $MFR_2$ (230°C) measured according to ISO 1133 in the range of 0.05 to 3.00 g/10min, more preferably in the range of 0.10 to 1.00 g/10min.

As preferably in the second polypropylene (PP2) the comonomer content is lower compared to the first polypropylene (PP1) also the overall xylene cold soluble (XCS) content of the mixture of the first polypropylene (PP1) and the second polypropylene (PP2) is preferably lower than the xylene cold soluble (XCS) content of the first polypropylene (PP1). Accordingly it is appreciated that the mixture of the first polypropylene (PP1) and the second polypropylene (PP2) has a xylene cold soluble (XCS) content of not more than 8.0 wt.-%, more preferably in the range of 2.0 to 8.0 wt.-%, yet more preferably in the range of 3.0 to 6.0 wt.-%.

Finally the random propylene copolymer (R-PP) is specified by the third polypropylene (PP3). The third polypropylene (PP3) has preferably the lowest comonomer content of the three polypropylenes (PP1), (PP2), and (PP3). Accordingly the third polypropylene (PP3) has a comonomer content of not more than 4.0 wt.-%, preferably of not more than 3.0 wt.-%, yet more preferably of not more than 2.0 wt.-%, still yet more preferably not more than 1.5 wt.%.

Thus in one embodiment the third polypropylene (PP3) is a second propylene homopolymer (H-PP2) and in another embodiment the third polypropylene (PP3) is a third random propylene copolymer (R-PP3) with a comonomer content of 0.5 to 3.5 wt.-%, more preferably with a comonomer content in the range of 0.5 to 3.0 wt.-%, yet more preferably with a comonomer content in the range of 0.5 to 2.0 wt.-%, like with a comonomer content in the range of 0.5 to 1.5 wt.-%.However it is especially preferred that the third polypropylene (PP3) is a second propylene homopolymer (H-PP2).

The melt flow rate $MFR_2$ (230°C) of the third polypropylene (PP3) can be vary in a broad range depending on the melt flow rate $MFR_2$ (230 C) desired for the final random propylene copolymer (R-PP). Accordingly the melt flow rate $MFR_2$ (230°C) of the third polypropylene (PP3) is preferably in the range of 0.0001 to 10.0 g/10min, more preferably in the range of 0.0002 to 10.0 g/10min.

As the melt flow rate $MFR_2$ (230 C) of the third polypropylene (PP3) can vary in a broad range, the same holds true for the weight average molecular weight (Mw). Accordingly the third polypropylene (PP3) has preferably a weight average molecular weight (Mw) measured by gel permeation chromatography (GPC) in the range of 300 to 50000 kg/mol, more preferably in the range of 300 to 10000 kg/mol.

A particular finding is that with a third polypropylene (PP3) having a rather high molecular weight a random propylene copolymer (R-PP) is obtainable with rather low melting point. On the other hand in case the third polypropylene (PP3) has a rather low molecular weight the final random propylene copolymer (R-PP) is featured by a rather high melting point. Without be bonded on the theory it might be that the third polypropylene (PP3) with low melt flow rate $MFR_2$ (230°C) is very well dispersed in the first polypropylene (PP1). As however the first polypropylene (PP1) is a first random propylene copolymer (R-PP1), the melting temperature of the final random propylene copolymer (R-PP) is mainly influenced by the first random propylene copolymer (R-PP1). On the other hand in case the third polypropylene (PP3) has a high melt flow rate $MFR_2$ (230°C), the first polypropylene (PP1) and the third polypropylene (PP3) are not perfectly mixed and thus the melting temperature of the final random propylene copolymer (R-PP) is noticeable also influenced by the rather high melting third polypropylene (PP3).Thus it is appreciated that in one embodiment, i.e. in case the random propylene copolymer (R-PP) shall preferably have a melting temperature of at least 150 °C, more preferably of at least 155 °C, like of at least 160 °C, the third polypropylene (PP3) being a second propylene homopolymer (H-PP2) has preferably

(a) a melt flow rate $MFR_2$ (230°C) above 2.5 g/10min, more preferably above 4.0 g/10min, yet more preferably above 5.0 g/10min
and/or
(b) a weight average molecular weight (Mw) measured by gel permeation chromatography (GPC) of at most 500 kg/mol, more preferably of at most 450 kg/mol, yet more preferably of at most 400 kg/mol.

In another embodiment, i.e. in case the random propylene copolymer (R-PP) shall preferably have a melting temperature of not more than 160 °C, more preferably of not more than 158 °C, the third polypropylene (PP3) being a second propylene homopolymer (H-PP2) has preferably

(a) a melt flow rate $MFR_2$ (230°C) below 1.0 g/10min, more preferably below 0.5 g/10min, yet more preferably below 0.1 g/10min, still more preferably below 0.01 g/10min,
and/or
(b) a weight average molecular weight (Mw) measured by gel permeation chromatography (GPC) of at least 550 kg/mol, more preferably of at least 1000 kg/mol, yet more preferably of at least 2000 kg/mol, still more preferably of at least 5000 kg/mol.

Particular good results are achievable in case the polypropylenes (PP1), (PP2) and (PP3) are present in specific amounts within the random propylene copolymer (R-PP). Thus the random propylene copolymer (R-PP) comprises

(a) 15 to 35 wt.-%, more preferably 18 to 30 wt.-%, of the first polypropylene (PP1),
(b) 55 to 75 wt.-%, more preferably 58 to 68 wt.-%, of the second polypropylene (PP2), and
(c) 5 to 25 wt.-%, more preferably 8 to 21 wt.-%, the third polypropylene (PP3), preferably with the proviso that the amount of the first polypropylene (PP1) is higher compared to the amount of the third polypropylene (PP3) within the random propylene copolymer (R-PP).

The amounts given in the previous paragraph refer to the total random propylene copolymer (R-PP), more preferably to the total sum of the polypropylenes (PP1), (PP2) and (PP3).
The weight ratios of the polypropylenes (PP1), (PP2) and (PP3) present in the random propylene copolymer (R-PP) provided above are also applicable to the preferred embodiments mentioned below.
Keeping the above mentioned information in mind, the present invention is in particular direct to the following specific embodiments.
In one specific embodiment the random propylene copolymer (R-PP) comprises

(a) a first polypropylene (PP1) being a first random propylene copolymer (R-PP1), said first random propylene copolymer (R-PP1) has

($\alpha$) a melt flow rate $MFR_{10}$ (230°C) measured according to ISO 1133 of not more than 1.5 g/10min, more preferably of not more than 1.0 g/10min
and
($\beta$) a comonomer content in the range of 2.5 to 12.0 wt.-%, more preferably in the range of 3.0 to 8.0 wt.-%,

(b) a second polypropylene (PP2) being a second random propylene copolymer (R-PP2), said second random propylene copolymer (R-PP2) has optionally a melt flow rate $MFR_2$ (230°C) of 1.0 to 10.0 g/10min, like 1.5 to 8.0

g/10min,
(c) a third polypropylene (PP3) being a second propylene homopolymer (H-PP2), wherein further

(i) optionally the first polypropylene (PP1) has higher melt flow rate $MFR_2$ (230 C) compared to the third polypropylene (PP3), preferably the second propylene homopolymer (H-PP2), has a melt flow rate $MFR_2$ (230°C) of below 0.1 g/10min, more preferably of below 0.01 g/10min, still more preferably of below 0.005 g/10min, and
(ii) the random propylene copolymer (R-PP) has a melt flow rate $MFR_2$ (230 C) measured according to ISO 1133 of 0.05 to 10.00 g/10min, and optionally

($\alpha$) a shear thinning index SHI (0/50) measured according to ISO 6271-10 (200 °C) of at least 15, more preferably of at least 20, yet more preferably in the range of 15 to 35, still more preferably in the range of 20 to 30,
and/or
($\beta$) a polydispersity index (PI) of at least 4.0, more preferably of at least 5.0, yet more preferably in the range of 4.0 to 10.0, still more preferably in the range of 5.0 to 8.0, like 5.5 to 7.0.

In a second specific embodiment the random propylene copolymer (R-PP) comprises

(a) a first polypropylene (PP1) being a first random propylene copolymer (R-PP1), said first random propylene copolymer (R-PP1) has

($\alpha$) a melt flow rate $MFR_{10}$ (230°C) measured according to ISO 1133 of not more than 1.5 g/10min, more preferably of not more than 1.0 g/10min
and
($\beta$) a comonomer content in the range of 2.5 to 12.0 wt.-%, more preferably in the range of 3.0 to 8.0 wt.-%,

(b) a second polypropylene (PP2) being a second random propylene copolymer (R-PP2), said second random propylene copolymer (R-PP2) has

($\alpha$) a comonomer content in the range of 0.5 to 5.0 wt.-%, more preferably in the range of 1.0 to 4.0 wt.-%, preferably the comonomer content of the second polypropylene (PP2) is lower than the comonomer content of the first polypropylene (PP1),
and
($\beta$) optionally a melt flow rate $MFR_2$ (230°C) which differs at most from the final random propylene copolymer (R-PP) by +/- 1.0 g/10min, more preferably by +/- 0.5 g/10min, and/or a melt flow rate $MFR_2$ (230°C) in the range of 0.1 to 2.0 g/10min,

(c) a third polypropylene (PP3) being a second propylene homopolymer (H-PP2) preferably with a melt flow rate $MFR_2$ (230°C) in the range of 1.0 to 10.0 g/10min, more preferably in the range of more than 2.0 to 8.0 g/10min,

wherein further

(i) the random propylene copolymer (R-PP) has a melt flow rate $MFR_2$ (230°C) measured according to ISO 1133 of 0.05 to 5.00 g/10min, more preferably in the range of 0.1 to 2.0 g/10min, like in the range of 0.2 to 1.0 g/10min and optionally

($\alpha$) a shear thinning index SHI (0/50) measured according to ISO 6271-10 (200°C) in the range of 9 to 20, still more preferably in the range of 10 to 18,
and/or
($\beta$) a polydispersity index (PI) in the range of 2.5 to 6.0, still more preferably in the range of 3.0 to 4.8.

The random propylene copolymer (R-PP) as defined in the instant invention may contain up to 10 wt.-% additives, like nucleating agents and antioxidants, as well as slip agents.
The instant invention is also directed to the use of random propylene copolymer (R-PP) for a pipe, like a pressure pipe, or for parts of a pipe, like a pressure pipe, and for the manufacture of pipes.
Furthermore, the present invention is also directed to pipes and/or pipe fittings, in particular pressure pipes, comprising, preferably comprising at least 75 wt.-%, more preferably comprising at least 90 wt.-%, like at least 95 wt.-

%, most preferably consists of, a random propylene copolymer (R-PP) as defined in the instant invention.

The term "pipe" as used herein is meant to encompass hollow articles having a length greater than diameter. Moreover the term "pipe" shall also encompass supplementary parts like fittings, valves and all parts which are commonly necessary for e.g. a hot water piping system.

Pipes according to the invention also encompass single and multilayer pipes, where for example one or more of the layers is a metal layer and which may include an adhesive layer. However it is preferred that the pipe is a single layer pipe.

The random propylene copolymer (R-PP) used for pipes according to the invention may contain usual auxiliary materials, e. g. up to 10 wt.-% fillers and/or 0.01 to 2.5 wt.-% stabilizers and/or 0.01 to 1 wt.-% processing aids and/or 0.1 to 1 wt.-% antistatic agents and/or 0.2 to 3 wt.-% pigments and/or reinforcing agents, e. g. glass fibres, in each case based on the random propylene copolymer (R-PP) used (the wt.-% given in this paragraph refer to the total amount of the pipe and/or a pipe layer comprising said random propylene copolymer (R-PP)). In this respect, it has to be noted, however, that any of such of auxiliary materials which serve as highly active $\alpha$-nucleating agents, such as certain pigments, preferably are not utilized in accordance with the present invention. The random propylene copolymer (R-PP) may in particular comprise $\beta$-nucleating agents.

The random propylene copolymer (R-PP) as defined above is preferably produced by a sequential polymerization process as defined below.

Accordingly the present invention is directed to a sequential polymerization process for producing a random propylene copolymer (R-PP), wherein said process comprises the steps of

(a) polymerizing propylene and at least one ethylene and/or a C4 to C20 $\alpha$-olefin in a first reactor (R1) obtaining a polypropylene (PP1) being a random propylene copolymer (R-PP1), said polypropylene (PP1) has a melt flow rate $MFR_{10}$ (230°C) measured according to ISO 1133 of not more than 1.5 g/10min,
(b) transferring the first polypropylene (PP1) in a second reactor (R2),
(c) polymerizing in the second reactor (R2) and in the presence of said first polypropylene (PP1) propylene and optionally at least one ethylene and/or a C4 to C20 $\alpha$-olefin obtaining thereby a second polypropylene (PP2), said first polypropylene (PP1) and said second polypropylene (PP2) form a (intimate) mixture and said second polypropylene (PP2) being a first propylene homopolymer (H-PP1) or a second random propylene copolymer (R-PP2),
(d) transferring the mixture of the first polypropylene (PP1) and the second polypropylene (PP2) in a third reactor (R3), and
(e) polymerizing in the third reactor (R3) and in the presence of the mixture of the first polypropylene (PP1) and the second polypropylene (PP2) propylene and optionally at least one ethylene and/or a C4 to C20 $\alpha$-olefin obtaining thereby a third polypropylene (PP3), said third polypropylene (PP3) being a second propylene homopolymer (H-PP2) or a third random propylene copolymer (R-PP3) and the first polypropylene (PP1), the second polypropylene (PP2) and the third polypropylene (PP3) form a (intimate) mixture.

Preferably between the second reactor (R2) and the third reactor (R3) the monomers are flashed out.

Preferably the mixture of step (e) is the random propylene copolymer (R-PP) as defined in the instant invention. For preferred embodiments of the first polypropylene (PP1), the second polypropylene (PP2), and the third polypropylene (PP3), reference is made to the definitions given above.

The term "sequential polymerization process" indicates that the polypropylene is produced in at least three reactors connected in series. Accordingly the present process comprises at least a first reactor (R1), a second reactor (R2) and a third reactor (R3). The term "polymerization reactor" shall indicate that the main polymerization takes place. Thus in case the process consists of three polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2) and the third reactor (R3) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2) and third reactor (R3) are gas phase reactors (GPR). Accordingly for the instant process at least three, preferably three polymerization reactors, namely a slurry reactor (SR), like loop reactor (LR), a first gas phase reactor (GPR-1), and a second gas phase reactor (GPR-2) connected in series are used. If needed prior to the

slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the random propylene copolymer (R-PP) as defined above the conditions for the first reactor (R1), i.e. the slurry reactor (SR), like a loop reactor (LR), of step (a) may be as follows:

- the temperature is within the range of 40 °C to 110 °C, preferably between 60 °C and 100 °C, 68 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3), preferably in the second gas phase reactor (GPR), is similar to the second reactor (R2).

The residence time can vary in the three reactor zones.

In one embodiment of the process for producing the polypropylene the residence time in bulk reactor, e.g. loop is in the range 0.2 to 4 hours, e.g. 0.3 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerisation is conducted as bulk slurry polymerisation in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the random propylene copolymer (R-PP) is obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

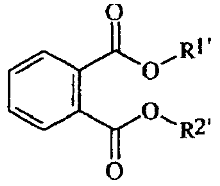

(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566.
First an adduct of $MgCl_2$ and a $C_1$-$C_2$ alcohol of the formula $MgCl_2{*}nROH$, wherein R is methyl or ethyl and n is 1 to 6, is formed. Ethanol is preferably used as alcohol.
The adduct, which is first melted and then spray crystallized or emulsion solidified, is used as catalyst carrier.
In the next step the spray crystallized or emulsion solidified adduct of the formula $MgCl_2{*}nROH$, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

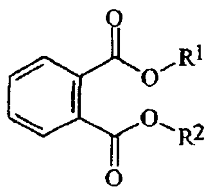

(II)

  with $R^1$ and $R^2$ being methyl or ethyl, preferably ethyl,
  the dialkylphthalat of formula (II) being the internal donor and
- recovering said transesterification product as the procatalyst composition (component (i)).

The adduct of the formula $MgCl_2{*}nROH$, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

For the production of the random propylene copolymer (R-PP) according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (III)

$$Si(OCH_3)_2R_2^5 \qquad (III)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, isobutyl, iso-pentyl, tert.-butyl, tert.-amyl, neopentyl, cyclopentyl, cyclohexyl, methylcyclopentyl and cycloheptyl.

More preferably the external donor is selected from the group consisting of diethylaminotriethoxysilane [$Si(OCH_2CH_3)_3(N(CH_2CH_3)_2)$], dicyclopentyl dimethoxy silane [$Si(OCH_3)_2$(cyclo-pentyl)$_2$], diisopropyl dimethoxy silane [$Si(OCH_3)_2(CH(CH_3)_2)_2$] and mixtures thereof.

The additives as stated above are added afterwards to the random propylene copolymer (R-PP), which is collected from the final reactor of the series of reactors. Preferably, these additives are mixed into the composition prior to or during the extrusion process in a one-step compounding process. Alternatively, a master batch may be formulated, wherein the random propylene copolymer (R-PP) is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles, like pipes, of the inventive random propylene copolymer (R-PP).

The random propylene copolymer (R-PP) according to the invention may be pelletized and compounded using any of the variety of compounding and blending methods well known and commonly used in the resin compounding art.

In the following the present invention is further illustrated by means of examples.

## EXAMPLES

### A. Measuring methods

The following definitions of terms and determination methods apply for the above general description of the invention as well as to the below examples unless otherwise defined. Calculation of melt flow rate $MFR_2$ (230 °C) of the second polypropylene (PP2):

$$MFR(PP2) = 10^{\left[\frac{\log(MFR(R2)) - w(PP1)\ x\ \log(MFR(PP1))}{w(PP2)}\right]} \quad (I)$$

wherein

w(PP1) is the weight fraction of the first polypropylene (PP1), i.e. the product of the first reactor (R1),

w(PP2) is the weight fraction of the second polypropylene (PP2), i.e. of the polymer produced in the second reactor (R2),

MFR(PP1) is the melt flow rate $MFR_2$ (230 °C) [in g/10min] measured according ISO 1133 of the first polypropylene

(PP1), i.e. of the the product of the first reactor (R1),
MFR(R2) is the melt flow rate $MFR_2$ (230 °C) [in g/10min] measured according ISO 1133 of the product obtained in the second reactor (R2), i.e. the mixture of the first polypropylene (PP1) and the second polypropylene (PP2),
MFR(PP2) is the calculated melt flow rate $MFR_2$ (230 °C) [in g/10min] of the second polypropylene (PP2).

Calculation of melt flow rate $MFR_2$ (230 °C) of the third polypropylene (PP3):

$$MFR(PP3) = 10^{\left[\frac{\log(MFR(R3)) - w(R2)\, x \log(MFR(R3))}{w(PP3)}\right]} \quad (II)$$

wherein

w(R2) is the weight fraction of the second reactor (R2), i.e. the mixture of the first polypropylene (PP1) and the second polypropylene (PP2),
w(PP3) is the weight fraction of the third polypropylene (PP3), i.e. of the polymer produced in the third reactor (R3),
MFR(R2) is the melt flow rate $MFR_2$ (230 °C) [in g/10min] measured according ISO 1133 of the product of the second reactor (R2), i.e of the mixture of the first polypropylene (PP1) and second polypropylene (PP2),
MFR(R3) is the melt flow rate $MFR_2$ (230 °C) [in g/10min] measured according ISO 1133 of the product obtained in the third reactor (R3), i.e. the mixture of the first polypropylene (PP1), the second polypropylene (PP2), and the third polypropylene (PP3),
MFR(PP3) is the calculated melt flow rate $MFR_2$ (230 °C) [in g/10min] of the third polypropylene (PP3).

**Calculation** of comonomer content of the second polypropylene (PP2):

$$\frac{C(R2) - w(PP1)x\, C(PP1)}{w(PP2)} = C(PP2) \quad (III)$$

wherein

w(PP1) is the weight fraction of the first polypropylene (PP1), i.e. the product of the first reactor (R1),
w(PP2) is the weight fraction of the second polypropylene (PP2), i.e. of the polymer produced in the second reactor (R2),
C(PP1) is the comonomer content [in wt.-%] measured by Fourier transform infrared spectroscopy (FTIR) of the first polypropylene (PP1), i.e. of the the product of the first reactor (R1),
C(R2) is the comonomer content [in wt.-%] measured by Fourier transform infrared spectroscopy (FTIR) of the product obtained in the second reactor (R2), i.e. the mixture of the first polypropylene (PP1) and the second polypropylene (PP2), C(PP2) is the calculated comonomer content [in wt.-%] of the second polypropylene (PP2).

**Calculation** of comonomer content of the third polypropylene (PP3):

$$\frac{C(R3) - w(R2)x\, C(R2)}{w(PP3)} = C(PP3) \quad (IV)$$

wherein

w(R2) is the weight fraction of the second reactor (R2), i.e. the mixture of the first polypropylene (PP1) and the second polypropylene (PP2),
w(PP3) is the weight fraction of the third polypropylene (PP3), i.e. of the polymer produced in the third reactor (R3),
C(R2) is the comonomer content [in wt.-%] measured by Fourier transform infrared spectroscopy (FTIR) of the product of the second reactor (R2), i.e of the mixture of the first polypropylene (PP1) and second polypropylene (PP2),
C(R3) is the comonomer content [in wt.-%] measured by Fourier transform infrared spectroscopy (FTIR) of the product obtained in the third reactor (R3), i.e. the mixture of the first polypropylene (PP1), the second polypropylene (PP2), and the third polypropylene (PP3),
C(PP3) is the calculated comonomer content [in wt.-%] of the third polypropylene (PP3).

**Calculation** of the xylene cold soluble (XCS) content of the second polypropylene (PP2):

$$\frac{XS(R2) - w(PP1)x\,XS(PP1)}{w(PP2)} = XS(PP2) \quad (V)$$

wherein

w(PP1) is the weight fraction of the first polypropylene (PP1), i.e. the product of the first reactor (R1),
w(PP2) is the weight fraction of the second polypropylene (PP2), i.e. of the polymer produced in the second reactor (R2),
XS(PP1) is the xylene cold soluble (XCS) content [in wt.-%] as determined at 23 °C according to ISO 6427 of the first polypropylene (PP1), i.e. of the the product of the first reactor (R1),
XS(R2) is the xylene cold soluble (XCS) content [in wt.-%] measured by Fourier transform infrared spectroscopy (FTIR) of the product obtained in the second reactor (R2), i.e. the mixture of the first polypropylene (PP1) and the second polypropylene (PP2),
XS(PP2) is the calculated xylene cold soluble (XCS) content [in wt.-%] of the second polypropylene (PP2).

**Calculation** of xylene cold soluble (XCS) content of the third polypropylene (PP3):

$$\frac{XS(R3) - w(R2)x\,XS(R2)}{w(PP3)} = XS(PP3) \quad (VI)$$

wherein

w(R2) is the weight fraction of the second reactor (R2), i.e. the mixture of the first polypropylene (PP1) and the second polypropylene (PP2),
w(PP3) is the weight fraction of the third polypropylene (PP3), i.e. of the polymer produced in the third reactor (R3),
XS(R2) is the xylene cold soluble (XCS) content [in wt.-%] as determined at 23 °C according to ISO 6427 of the product of the second reactor (R2), i.e of the mixture of the first polypropylene (PP1) and second polypropylene (PP2),
XS(R3) is the xylene cold soluble (XCS) content [in wt.-%] measured by Fourier transform infrared spectroscopy (FTIR) of the product obtained in the third reactor
(R3), i.e. the mixture of the first polypropylene (PP1), the second polypropylene (PP2), and the third polypropylene (PP3),
XS(PP3) is the calculated xylene cold soluble (XCS) content [in wt.-%] of the third polypropylene (PP3).

**Calculation** of the weight average molecular weight (Mw) of the second polypropylene (PP2) and third polypropylene (PP3)

The weight average molecular weight (Mw) of the second polypropylene (PP2) is calculated from the molecular weight distribution obtained by subtraction of the molecular weight distribution of the first polypropylene (PP1) from the molecular weight distribution of the mixture R2, both of which are determined by Gel Permeation Chromatography (GPC) as described below. The weight average molecular weight (Mw) of the third polypropylene (PP3) is calculated from the molecular weight distribution obtained by subtraction of the molecular weight distribution of the mixture R2 from the molecular weight distribution of the mixture R3, both of which are determined by Gel Permeation Chromatography (GPC) as described below. A linear weighted mixing rule is assumed for both these subtractions.

**NMR-spectroscopy measurements:**

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inouc. R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Melting temperature and degree of crystallinity**

Melting temperature Tm, crystallization temperature Tcr, and the degree of crystallinity were measured with Mettler TA820 differential scanning calorimetry (DSC) on 5 to 10 mg, typically 8±0.5 mg samples. Both crystallization and melting curves were obtained during 10°C/min cooling and heating scans between 30°C and 225°C. Melting and crystallization temperatures were taken as the peaks of endotherms and exotherms. The degree of crystallinity was calculated by comparison with heat of fusion of a perfectly crystalline polypropylene, i.e. 209 J/g.

**Randomness**

In the FTIR measurements, films of 250 -mm thickness were compression moulded at 225 °C and investigated on a Perkin-Elmer System 2000 FTIR instrument. The ethylene peak area (760-700 $cm^{-1}$) was used as a measure of total ethylene content. The absorption band for the structure -P-E-P- (one ethylene unit between propylene units), occurs at 733 $cm^{-1}$. This band characterizes the random ethylene content. For longer ethylene sequences (more than two units), an absorption band occurs at 720 $cm^{-1}$. Generally, a shoulder corresponding to longer ethylene runs is observed for the random copolymers. The calibration for total ethylene content based on the area and random ethylene (PEP) content based on peak height at 733 $cm^{-1}$ was made by $^{13}$C-NMR. (Thermochimica Acta, 66 (1990) 53-68).

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Rheology:** Dynamic rheological measurements were carried out with Rheometrics RDA-II QC on compression molded samples under nitrogen atmosphere at 200°C using 25 mm-diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity (η*) were obtained as a function of frequency (ω).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad \text{and} \quad \eta'' = G' / \omega$$

$$f'(\omega) = G''(\omega) \cdot \omega / [G'(\omega)^2 + G''(\omega)^2]$$

$$f''(\omega) = G'(\omega) \cdot \omega / [G'(\omega)^2 + G''(\omega)^2]$$

**The polydispersity index, PI,** , = $10^5$/Gc, is calculated from cross-over point of G'(ω) and G"(ω), for which

G'(ωc) = G"(ωc) = Gc holds.

**Shear thinning indexes (SHI),** which are correlating with MWD and are independent of Mw, were calculated according to Heino [1,2)] (below).

**SHI** is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995

### Melt Flow Rate ($MFR_2$ and $MFR_{10}$)

The melt flow rates were measured with a load of 2.16 kg ($MFR_2$) and of 10 kg ($MFR_{10}$), respectively, at 230 °C. The melt flow rate is that quantity of polymer in grams which the test apparatus standardized to ISO 1133 extrudes within 10 minutes at a temperature of 230 °C under a load of 2.16 kg and 10 kg, respectively.

### Comonomer content

The comonomer contents of the copolymer was determined by quantitative Fourier transform infrared spectroscopy (FTIR) calibrated to results obtained from quantitative $^{13}C$ NMR spectroscopy.

Thin films were pressed to a thickness of between 300 to 500 μm at 190 °C and spectra recorded in transmission mode. Relevant instrument settings include a spectral window of 5000 to 400 wave-numbers ($cm^{-1}$), a resolution of 2.0 $cm^{-1}$ and 8 scans.

The butene content of a propylene-butene copolymer was determined using the baseline corrected peak maxima of a quantitative band at 767 $cm^{-1}$, with the baseline defined from 780-750 $cm^{-1}$.

The hexene content of a propylene-hexene copolymer was determined using the baseline corrected peak maxima of a quantitative band at 727 $cm^{-1}$, with the baseline defined from 758.5 to 703.0 $cm^{-1}$)

The comonomer content C was determined using a film thickness method using the intensity of the quantitative band I(q) and the thickness of the pressed film T using the following relationship: $[I(q) / T]m + c = C$ where m and c are the coefficients determined from the calibration curve constructed using the comonomer contents obtained from $^{13}C$ NMR spectroscopy.

### Xylene cold soluble fraction (XCS wt%)

The xylene cold soluble fraction (XCS) is determined at 23 °C according to ISO 6427.

### Stepwise Isothermal Segregation Technique (SIST)

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy

of fractions melting within temperature intervals of 50 to 60 °C; 60 to 70 °C; 70 to 80 °C; 80 to 90 °C; 90 to 100°C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

The melting curve of the material crystallised this way can be used for calculating the lamella thickness distribution according to Thomson-Gibbs equation (Eq 1.).

$$T_m = T_0\left(1 - \frac{2\sigma}{\Delta H_0 \cdot L}\right) \qquad (1)$$

where $T_0$=457K, $\Delta H_0$ =134x10$^6$ J/m$^3$, $\sigma$ = 49.6x10$^{-3}$ J/m$^3$ and L is the lamella thickness.

**Temperature Rising Elution Fractionation (TREF):**

The chemical composition distribution was determined by analytical Temperature Rising Elution Fractionation (a-TREF) as described in J.B.P. Soares, A.E. Hamielec; Temperature rising elution fractionation of linear polyolefins; Polymer 1995, 36 (8), 1639-1654 and Soares, J.B.P., Fractionation, In: Encyclopedia Of Polymer Science and Technology, John Wiley & Sons, New York, pp. 75-131, Vol. 10, 2001. The separation of the polymer in a-TREF is according to crystallinity. The TREF profiles were generated using a CRYSTAF-TREF 200+ instrument manufactured by PolymerChar S.A. (Valencia, Spain). The experimental procedure, as described in N. Aust, M. Gahleitner, K. Reichelt, B. Raninger; Optimization of run parameters of temperature-rising elution fractionation with the aid of a factorial design experiment; Polymer Testing 2006, 25 (7), 896-903 was as follows:
In the dissolution step, the polymer sample was dissolved in 1,2,4-trichlorobenzene (TCB, 2 to 4 mg/mL, stabilized with 300 mg/L 2,6-Di tert butyl-4-methyl-phenol) in one of the vessels at a concentration of 4 mg/mL at 160 °C for at least 90 min. The sample was then loaded into the TREF column (7.8 mm inner diameter, 15 cm length, packed with stainless steel shots as inert support), and held at 110 °C for 30 min for stabilization. The polymer sample was crystallized and precipitated onto the support inside the TREF column by a slow reduction of the temperature to 30 °C under a constant cooling rate (0.1 °C/min). The column temperature was kept at 30 °C for 25 min for stabilization before the elution step started. In the elution step, a solvent (TCB) flowed through the column at a constant flow rate of 0.5 mL/min while the temperature in the column was first held for 10 min at 30 °C to measure the remaining soluble fraction followed by slowly increasing the temperature to 130 °C at a constant heating rate (0.5 °C/min). The concentration of the polymer being eluted was measured during the whole elution step with an infrared detector (measuring the C-H absorption at 3.5 microns wavelength) and recorded together with the temperature in the column oven as a function of time.

The concentration signal was plotted as a function of the elution temperature (TREF profile). For convenience the under isothermal conditions (30 °C, 10 min) measured soluble fraction was added to this plot by converting the time into temperature using the constant heating rate of 0.5 °C/min. In the TREF calculation software (by Polymer Char, version 07a) the concentration plot (TREF profile) was normalized including the soluble fraction.

**Tensile Modulus** is measured according to ISO 527-2 (cross head speed = 50 mm/min; 23 °C) using injection molded specimens as described in EN ISO 1873-2 (dog bone shape, 4 mm thickness).

**Charpy notched impact strength** is determined according to ISO 179 / 1eA at 23 °C and at 0 °C by using injection moulded test specimens as described in EN ISO 1873-2 (80 x 10 x 4 mm).

**Pressure test performance** is measured according to ISO 1167. In this test, a specimen is exposed to constant circumferential (hoop) stress of 16 MPa at elevated temperature of 20 °C in water-in-water. The time in hours to failure is recorded. The tests were performed on pipes produced on a conventional pipe extrusion equipment, the pipes having a diameter of 32 mm and a wall thickness of 3 mm.

**B. Examples**

**Table 1:** Process parameters

| | Parameter | unit | E1 | E2 | E3 |
|---|---|---|---|---|---|
| | | | R/R/H | R/R/R | R/R/H |
| prepoly | temperature | [°C] | 30 | 30 | 30 |
| | pressure | [kPa] | 5300 | 5300 | 5300 |
| | Al/donor ratio | [mol/mol] | 10 | 10 | 10 |
| | residence time | [h] | 0.3 | 0.3 | 0.3 |
| 1st reactor | temperature | [°C] | 68 | 68 | 68 |
| | pressure | [kPa] | 5300 | 5300 | 5300 |
| | residence time | [h] | 0.3 | 0.4 | 0.4 |
| | ethylene feed | [kg/h] | 1.7 | 1.6 | 1.5 |
| | H2/C3 ratio | [mol/mol] | 0.04 | 0.05 | 0.05 |
| | C2/C3 ratio | [mol/mol] | 6 | 7 | 7 |
| | split | [wt.-%] | 25 | 20 | 26 |
| | XCS | [wt.-%] | 8 | 10 | 8 |
| 2nd reactor | temperature | [°C] | 80 | 80 | 80 |
| | pressure | [kPa] | 1900 | 1900 | 1900 |
| | residence time | [h] | 2 | 2.25 | 2.5 |
| | ethylene feed | [kg/h] | 2.6 | 2.3 | 2.8 |
| | H2/C3 ratio | [mol/mol] | 31 | 6.6 | 6.6 |
| | C2/C3 ratio | [mol/mol] | 22 | 23 | 26 |
| | split | [wt.-%] | 67 | 60 | 60 |
| | XCS | [wt.-%] | 4.5 | 4.9 | 5.1 |
| 3rd reactor | temperature | [°C] | 90 | 85 | 85 |
| | pressure | [kPa] | 2700 | 2700 | 2700 |
| | residence time | [h] | 1.8 | 2.7 | 3.1 |
| | ethylene feed | [kg/h] | 0.2 | 1.9 | 0.1 |
| | C2/C3 ratio | [mol/mol] | 0 | 24 | 0 |
| | H2/C2 ratio | [mol/mol] | 0 | 233 | 0 |
| | split | [wt.-%] | 8 | 20 | 13 |
| | XCS | [wt.-%] | 4 | 4.4 | 3.6 |

**Table 2:** Properties of the random propylene copolymers

| | | E1 | E2 | E3 | CE 1 |
|---|---|---|---|---|---|
| | | R/R/H | R/R/R | R/R/H | |
| **Loop** | | | | | |
| Split Loop/GPR1/GPR2 | [wt.-%] | 25 | 20 | 26 | |
| split loop/GPR | [wt.-%] | 27.1 | 25 | 29.9 | |
| $MFR_2$ (PP1) | [g/10 min] | 0.044 | 0.043 | 0.052 | |
| $MFR_{10}$ (PP1) | [g/10 min] | 0.71 | 0.69 | 0.83 | |
| XCS (PP1) | [wt.-%] | 8.2 | 9.6 | 7.7 | |
| C2 content (PP1) | [wt.-%] | 3.77 | 4.26 | 4.2 | |
| **GPR1** | | | | | |
| Loop/GPR1/GPR2 | [wt.-%] | 67 | 60 | 61 | |
| $MFR_2$ (PP1 + PP2) | [g/10 min] | 0.66 | 0.28 | 0.3 | |

(continued)

| | | E1 | E2 | E3 | CE 1 |
|---|---|---|---|---|---|
| | | R/R/H | R/R/R | R/R/H | |
| **Loop** | | | | | |
| $MFR_2$ (PP2) | [g/10 min] | 2.3 | 0.56 | 0.7 | |
| XCS (PP1 + PP2) | [wt.-%] | 4.5 | | 5.1 | |
| C2 (PP1 + PP2) | [wt.-%] | 3.08 | 3.4 | 3.54 | |
| C2 (PP2) | [wt.-%] | 2.8 | 3.1 | 3.2 | |
| SHI 0/50 (PP1 + PP2) | [-] | 22.2 | | 12.9 | |
| PI (PP1 + PP2) | [-] | 5.2 | | 4.1 | |
| **GPR2** | | | | | |
| Loop/GPR1/GPR2 | [wt.-%] | 8 | 20 | 13 | |
| $MFR_2$ (PP1 + PP2 + PP3) | [g/10 min] | 0.35 | 0.48 | 0.43 | |
| $MFR_2$ (PP3) | [g/10 min] | 0.002 | 6 | 7 | |
| XCS (PP1 + PP2+ PP3) | [wt.-%] | 4.1 | 5.4 | 3.8 | |
| C2 (PP1 + PP2+ PP3) | [wt.-%] | 2.6 | 3.4 | 2.3 | |
| C2 (PP3) | [wt.-%] | 0 | 3.4 | 0 | |
| **Pellet** | | | | | |
| $MFR_2$ | [g/10 min] | 0.34 | 0.45 | 0.44 | 0.23 |
| Tm | [°C] | 154 | 146.7 | 160.7 | 144 |
| Tcr | [°C] | 116.7 | 108.5 | 119.9 | 105 |
| Mw | [kg/mol] | 524 | 420 | 421 | 447 |
| Mw/Mn | [-] | 6.9 | 4.7 | 4.5 | 4.6 |
| SHI 0/50 | [-] | 27.6 | 10.5 | 10.5 | 9.3 |
| PI | [-] | 6.18 | 3.7 | 3.8 | 3.6 |
| Tensile modulus | [MPa] | 1160 | 940 | 1190 | 900 |
| Charpy notched at RT | [$kJ/m^2$] | 13.8 | 16.5 | 16.8 | 4.3 |
| Charpy notched at 0 C | [$kJ/m^2$] | 4.4 | 6.1 | 4.2 | 3.5 |
| Pressure test (16 MPa/20 °C) | [h] | 2048 | 41 | 4358 | 10 |

**Table 3:** TREF results

| | | E1 | E2 | E3 | CE 1 |
|---|---|---|---|---|---|
| T (abs. maximum) | [°C] | 117 | 102 | 118 | 104 |
| amount eluted between 25-80 °C | [wt.-%] | 10 | 4 | 8 | 12 |
| amount eluted between 80-90 °C | [wt.-%] | 4 | 5 | 3 | 7 |
| amount eluted between 90-100 °C | [wt.-%] | 12 | 34 | 7 | 25 |
| amount eluted between 100-110 °C | [wt.-%] | 32 | 57 | 19 | 56 |
| | | E1 | E2 | E3 | CE 1 |
| amount eluted at T > 110 °C | [wt.-%] | 42 | 0 | 63 | 0 |

**Table 4:** SIST results

| | | E1 | E2 | E3 | CE 1 |
|---|---|---|---|---|---|
| T Range | Lc range | Fraction | Fraction | Fraction | Fraction |
| [°C] | [nm] | [wt.-%] | [wt.-%] | [wt.-%] | [wt.-%] |
| 50 - 60 | 2.52 - 2.73 | 0.1 | 0.2 | 0.0 | 0.1 |
| 60 - 70 | 2.74 - 2.97 | 0.2 | 0.7 | 0.1 | 0.5 |
| 70 - 80 | 2.98 - 3.25 | 0.6 | 1.3 | 0.4 | 1.0 |
| 80 - 90 | 3.26 - 3.60 | 1.0 | 2.1 | 0.8 | 1.6 |
| 90 - 100 | 3.61 - 4.03 | 1.3 | 2.6 | 1.1 | 2.0 |
| 100 - 110 | 4.04 - 4.57 | 1.1 | 2.4 | 0.9 | 1.7 |
| 110 - 120 | 4.58 - 5.28 | 3.5 | 5.4 | 3.4 | 4.6 |
| 120 - 130 | 5.29 - 6.26 | 7.0 | 10.3 | 7.1 | 9.4 |
| 130 - 140 | 6.27 - 7.69 | 12.2 | 23.5 | 12.5 | 24.7 |
| 140 - 150 | 7.70 - 9.95 | 21.3 | 25.8 | 22.3 | 11.1 |
| 150 - 160 | 9.96 - 14.09 | 31.8 | 11.1 | 33.0 | 22.5 |
| > 160 | > 14.09 | 14.1 | 0.2 | 11.8 | 0.1 |

## Claims

**1.** Random propylene copolymer (R-PP) comprising

(a) 15 to 35 wt.-% of a first polypropylene (PP1) being a first random propylene copolymer (R-PP1), said first random propylene copolymer (R-PP1) has a comonomer content in the range of 2.5 to 12 wt.-% and a melt flow rate $MFR_{10}$ (230 °C) measured according to ISO 1133 of not more than 1.5 g/10min,
(b) 55 to 75 wt.-% of a second polypropylene (PP2) being a first propylene homopolymer (H-PP1) or a second random propylene copolymer (R-PP2), said second polypropylene (PP2) has a comonomer content of not more than 5.0 wt.-%, and
(c) 5 to 25 wt.-% of a third polypropylene (PP3) being a second propylene homopolymer (H-PP2) or a third random propylene copolymer (R-PP3), said third random propylene copolymer (R-PP3) has a comonomer content of 0.5 to 3.5 wt.-%,

wherein further

(i) first polypropylene (PP1) differs from the second polypropylene (PP2) and the third polypropylene (PP3) by the melt flow rate $MFR_2$ (230 °C) and/or by the comonomer content [wt.-%],
(ii) the second polypropylene (PP2) differs from the third polypropylene (PP3) by the melt flow rate $MFR_2$ (230 °C) and/or by the comonomer content [wt.-%],
(iii) the random propylene copolymer (R-PP) has a melt flow rate $MFR_2$ (230 °C) measured according to ISO 1133 of 0.05 to 10.00 g/10min, and
(iv) the random propylene copolymer (R-PP) has a comonomer content in the range of 1.5 to 10 wt.-%.

**2.** Random propylene copolymer (R-PP) according to claim 1, wherein the first polypropylene (PP1) being the first random propylene copolymer (R-PP1) has

(a) a lower melt flow rate $MFR_2$ (230 °C) compared to the second polypropylene (PP2) and/or the third polypropylene (PP3),
and/or
(b) a higher comonomer content [wt.-%] compared to the second polypropylene (PP2) and/or the third polypropylene (PP3).

3. Random propylene copolymer (R-PP) according to claim 1 or 2, wherein

(a) the second polypropylene (PP2) is a first propylene homopolymer (H-PP1) and the third polypropylene (PP3) is a third random propylene copolymer (R-PP3),
or
(b) the second polypropylene (PP2) is a second random propylene copolymer (R-PP2) and the third polypropylene (PP3) is a second propylene homopolymer (H-PP2).

4. Random propylene copolymer (R-PP) according to any one of the preceding claims, wherein either the second polypropylene (PP2) or the third polypropylene (PP3) has a melt flow rate $MFR_2$ (230 °C) above 2.0 g/10min.

5. Random propylene copolymer (R-PP) according to any one of the preceding claims, wherein the random propylene copolymer (R-PP) has

(a) a shear thinning index SHI (0/50) measured according to ISO 6271-10 (200 °C) of at least 10
and/or
(b) a melting temperature of at least 145 °C determined by DSC.

6. Random propylene copolymer (R-PP) according to any one of the preceding claims, wherein the random propylene copolymer (R-PP) has

(a) a xylene cold soluble (XCS) content of not more than 10.0 wt.-%,
and/or
(b) at least 9 wt-% of a crystalline fraction having a lamella thickness of more than 14.09 nm, wherein said fraction is determined by the stepwise isothermal segregation technique (SIST)
and/or
(c) a temperature rising elution fractionation (TREF) curve with an absolute maximum over 110 °C.

7. Random propylene copolymer (R-PP) according to any one of the preceding claims, wherein the first polypropylene (PP1) being the first random propylene copolymer (R-PP1) has

(a) a weight average molecular weight (Mw) measured by Gel Permeation Chromatography (GPC) of at least 500 kg/mol,
and/or
(b) a melt flow rate $MFR_{10}$ (230 °C) measured according to ISO 1133 in the range of 0.3 to 1.0 g/10min,
and/or
(c) a xylene cold soluble (XCS) content of not more than 10.0 wt.-%.

8. Random propylene copolymer (R-PP) according to any one of the preceding claims, wherein the second polypropylene (PP2) has

(a) a weight average molecular weight (Mw) measured by Gel Permeation Chromatography (GPC) in the range of 150 to 550 kg/mol,
and/or
(b) a melt flow rate $MFR_2$ (230 °C) in the range of 0.4 to 5.0 g/10min.

9. Random propylene copolymer (R-PP) according to any one of the preceding claims, wherein the mixture of the first polypropylene (PP1) and the second polypropylene (PP2) has

(a) a comonomer content in the range of 0.5 to 5.0 wt.-%,
and/or
(b) a shear thinning index SHI (0/50) measured according to ISO 6271-10 (200 °C) in the range of 10 to 35,
and/or
(c) a melt flow rate $MFR_2$ (230 °C) measured according to ISO 1133 in the range of 0.05 to 1.0 g/10min, preferably in the range of 0.05 to 1.0 g/10min.

10. Random propylene copolymer (R-PP) according to any one of the preceding claims, wherein the mixture of the first polypropylene (PP1) and the second polypropylene (PP2) a xylene cold soluble (XCS) content of not more than 8.0

wt.-%.

**11.** Random propylene copolymer (R-PP) according to any one of the preceding claims, wherein the third polypropylene (PP3) has

(a) a comonomer content of not more than 4.0 wt.-%,
and/or
(b) a weight average molecular weight (Mw) measured by Gel Permeation Chromatography (GPC) in the range of 300 to 50000 kg/mol,
and/or
(c) a melt flow rate $MFR_2$ (230 °C) in the range of 0.001 to 10.0 g/10min.

**12.** Random propylene copolymer (R-PP) according to any one of the preceding claims, wherein the random propylene copolymer (R-PP), the first random propylene copolymer (R-PP1), the second random propylene copolymer (R-PP2), and the third random propylene copolymer (R-PP3) comprise units derivable from

(a) propylene
and
(b) ethylene and/or a C4 to C20 α-olefin.

**13.** Random propylene copolymer (R-PP) according to any one of the preceding claims, wherein the amount of the first polypropylene (PP1) is higher compared to the amount of the third polypropylene (PP3) within the random propylene copolymer.

**14.** Process for the preparation of a random propylene copolymer according to any one of the preceding claims 1 to 13 in a sequential polymerization process, wherein said process comprises the steps of

(a) polymerizing propylene and at least one ethylene and/or a C4 to C20 α-olefin in a first reactor (R1) obtaining the a polypropylene (PP1) being the a random propylene copolymer (R-PP1), said polypropylene (PP1) has a melt flow rate $MFR_{10}$ (230 °C) measured according to ISO 1133 of not more than 1.5 g/10min,
(b) transferring the first polypropylene (PP1) in a second reactor (R2),
(c) polymerizing in the second reactor (R2) and in the presence of said first polypropylene (PP1) propylene and optionally at least one ethylene and/or a C4 to C20 α-olefin obtaining thereby a second polypropylene (PP2), said first polypropylene (PP1) and said second polypropylene (PP2) form a (intimate) mixture and said second polypropylene (PP2) being a first propylene homopolymer (H-PP1) or a second random propylene copolymer (R-PP2),
(d) transferring the mixture of the first polypropylene (PP1) and the second polypropylene (PP2) in a third reactor (R3), and
(e) polymerizing in the third reactor (R3) and in the presence of the mixture of the first polypropylene (PP1) and the second polypropylene (PP2) propylene and optionally at least one ethylene and/or a C4 to C20 α-olefin obtaining thereby a third polypropylene (PP3), said third polypropylene (PP3) being a second propylene homopolymer (H-PP2) or a third random propylene copolymer (R-PP3) and the first polypropylene (PP1), the second polypropylene (PP2) and the third polypropylene (PP3) form a (intimate) mixture.

**15.** Use of a random propylene copolymer (R-PP) according to any one of the preceding claims 1 to 13 in pipes.

**16.** Pipes comprising a random propylene copolymer (R-PP) according to any one of the preceding claims 1 to 13.

## Patentansprüche

**1.** Random-Propylencopolymer (R-PP), umfassend

(a) 15 bis 35 Gew.-% eines ersten Polypropylens (PP1), das ein erstes Random-Propylencopolymer (R-PP1) ist, wobei das erste Random-Propylencopolymer (R-PP1) einen Comonomer-Gehalt im Bereich von 2,5 bis 12 Gew.-% und eine Schmelzflussrate $MFR_{10}$ (230°C), gemessen nach ISO 1133, von nicht mehr als 1,5 g/10 min hat,
(b) 55 bis 75 Gew.-% eines zweiten Polypropylens (PP2), das ein erstes Propylen-Homopolymer (H-PP1) oder

ein zweites Random-Propylencopolymer (R-PP2) ist, wobei das zweite Polypropylen (PP2) einen Comonomer-Gehalt im Bereich von nicht mehr als 5,0 Gew.-% hat,
(c) 5 bis 25 Gew.-% eines dritten Polypropylens (PP3), das ein zweites Propylen-Homopolymer (H-PP2) oder ein drittes Random-Propylencopolymer (R-PP3) ist, wobei das dritte Random-Propylencopolymer (R-PP3) einen Comonomer-Gehalt im Bereich von 0,5 bis 3,5 Gew.-% hat,

wobei ferner

(i) das erste Polypropylen (PP1) sich von dem zweiten Polypropylen (PP2) und dem dritten Polypropylen (PP3) durch die Schmelzflussrate $MFR_2$ (230°C) und/oder den Comonomer-Gehalt [Gew.-%] unterscheidet,
(ii) das zweite Polypropylen (PP2) sich von dem dritten Polypropylen (PP3) durch die Schmelzflussrate $MFR_2$ (230°C) und/oder den Comonomer-Gehalt [Gew.-%] unterscheidet,
(iii) das Random-Propylencopolymer (R-PP) eine Schmelzflussrate $MFR_2$ (230°C), gemessen nach ISO 1133, von 0,05 bis 10,00 g/10min hat, und
(iv) das Random-Propylencopolymer (R-PP) einen Comonomer-Gehalt im Bereich von 1,5 bis 10 Gew.-% hat.

**2.** Random-Propylencopolymer (R-PP) nach Anspruch 1, wobei das erste Polypropylen (PP1), das ein erstes Random-Propylencopolymer (R-PP1) ist,

(a) eine niedrigere Schmelzflussrate $MFR_2$ (230°C) im Vergleich zum zweiten Polypropylen (PP2) und/oder dritten Polypropylen (PP3) hat,
und/oder
(b) einen höheren Comonomer-Gehalt [Gew.-%] im Vergleich zum zweiten Polypropylen (PP2) und/oder dritten Polypropylen (PP3) hat.

**3.** Random-Propylencopolymer (R-PP) nach Anspruch 1 oder 2, wobei

(a) das zweite Polypropylen (PP2) ein erstes Propylen-Homopolymer (H-PP1) und das dritte Polypropylen (PP3) ein drittes Random-Propylencopolymer (R-PP3) ist,
oder
(b) das zweite Polypropylen (PP2) ein zweites Random-Propylencopolymer (R-PP2) und das dritte Polypropylen (PP3) ein zweites Propylen-Homopolymer (H-PP2) ist.

**4.** Random-Propylencopolymer (R-PP) nach einem der vorhergehenden Ansprüche, wobei entweder das zweite Polypropylen (PP2) oder das dritte Polypropylen (PP3) eine Schmelzflussrate $MFR_2$ (230°C) über 2,0 g/10 min hat.

**5.** Random-Propylencopolymer (R-PP) nach einem der vorhergehenden Ansprüche, wobei das Random-Propylencopolymer (R-PP)

(a) einen Scherverdünnungsindex SHI (0/50), gemessen nach ISO 6271-10 (200°C), von mindestens 10 hat,
und/oder
(b) eine Schmelztemperatur von mindestens 145°C hat, bestimmt durch DSC.

**6.** Random-Propylencopolymer (R-PP) nach einem der vorhergehenden Ansprüche, wobei das Random-Propylencopolymer (R-PP)

(a) einen Xylol-kaltlöslichen (XCS) Anteil von nicht mehr als 10,0 Gew.-% hat,
und/oder
(b) mindestens 9 Gew.-% einer kristallinen Fraktion mit einer Lamellendicke von mehr als 14,09 nm hat, wobei die Fraktion durch schrittweise isothermische Abtrennungstechnik (SIST) bestimmt ist, und/oder
(c) eine Temperaturanstiegs-Elutions-Fraktionierungs-(TREF)-Kurve mit einem absoluten Maximum über 110°C hat.

**7.** Random-Propylencopolymer (R-PP) nach einem der vorhergehenden Ansprüche, wobei das erste Polypropylen (PP1), das ein erstes Random-Propylencopolymer (R-PP1) ist,

(a) ein Gewichtsmittel des Molekulargewichts (Mw), gemessen mittels Gelpermeationschromatographie (GPC), von mindestens 500 kg/mol hat,

und/oder
(b) eine Schmelzflussrate $MFR_{10}$ (230°C), gemessen nach ISO 1133, im Bereich von 0,3 bis 1,0 g/10 min hat, und/oder
(c) einen Xylol-kaltlöslichen (XCS) Anteil von nicht mehr als 10,0 Gew.-% hat.

**8.** Random-Propylencopolymer (R-PP) nach einem der vorhergehenden Ansprüche, wobei das zweite Polypropylen (PP2)

(a) ein Gewichtsmittel des Molekulargewichts (Mw), gemessen mittels Gelpermeationschromatographie (GPC), im Bereich von 150 bis 550 kg/mol hat,
und/oder
(b) eine Schmelzflussrate $MFR_2$ (230°C) im Bereich von 0,4 bis 5,0 g/10 min hat.

**9.** Random-Propylencopolymer (R-PP) nach einem der vorhergehenden Ansprüche, wobei die Mischung aus dem ersten Polypropylen (PP1) und dem zweiten Polypropylen (PP2)

(a) einen Comonomer-Gehalt im Bereich von 0,5 bis 5,0 Gew.-% hat, und/oder
(b) einen Scherverdünnungsindex SHI (0/50), gemessen nach ISO 6271-10 (200°C), im Bereich von 10 bis 35 hat,
und/oder
(c) eine Schmelzflussrate $MFR_2$ (230°C), gemessen nach ISO 1133, im Bereich von 0,05 bis 1,0 g/10 min hat, vorzugsweise im Bereich von 0,05 bis 1,0 g/10 min.

**10.** Random-Propylencopolymer (R-PP) nach einem der vorhergehenden Ansprüche, wobei die Mischung aus dem ersten Polypropylen (PP1) und dem zweiten Polypropylen (PP2) einen Xylol-kaltlöslichen (XCS) Anteil von nicht mehr als 8,0 Gew.-% hat.

**11.** Random-Propylencopolymer (R-PP) nach einem der vorhergehenden Ansprüche, wobei das dritte Polypropylen (PP3)

(a) einen Comonomer-Gehalt von nicht mehr als 4,0 Gew.-% hat, und/oder
(b) ein Gewichtsmittel des Molekulargewichts (Mw), gemessen mittels Gelpermeationschromatographie (GPC), im Bereich von 300 bis 50000 kg/mol hat,
und/oder
(c) eine Schmelzflussrate $MFR_2$ (230°C) im Bereich von 0,001 bis 10,0 g/10 min hat.

**12.** Random-Propylencopolymer (R-PP) nach einem der vorhergehenden Ansprüche, wobei das Random-Propylencopolymer (R-PP), das erste Random-Propylencopolymer (R-PP1), das zweite Random-Propylencopolymer (R-PP2), und das dritte Random-Propylencopolymer (R-PP3) Einheiten umfassen, ableitbar von

(a) Propylen
und
(b) Ethylen und/oder einem $C_4$- bis $C_{20}$-$\alpha$-Olefin.

**13.** Random-Propylencopolymer (R-PP) nach einem der vorhergehenden Ansprüche, wobei die Menge des ersten Polypropylens (PP1) höher im Vergleich zu der Menge des dritten Polypropylens (PP3) in dem Random-Propylencopolymer ist.

**14.** Verfahren zur Herstellung eines Random-Propylencopolymers (R-PP) nach einem der vorhergehenden Ansprüche 1 bis 13 in einem sequentiellen Polymerisationsverfahren, wobei das Verfahren die Schritte umfasst

(a) Polymerisieren von Propylen und wenigstens einem von Ethylen und/oder $C_4$- bis $C_{20}$-$\alpha$-Olefin in einem ersten Reaktor (R1), um ein Polypropylen (PP1), das ein Random-Propylencopolymer (R-PP1) ist, zu erhalten, wobei das Polypropylen (PP1) eine Schmelzflussrate $MFR_{10}$ (230°C), gemessen nach ISO 1133, von nicht mehr als 1,5 g/10 min hat,
(b) Überführen des ersten Polypropylens (PP1) in einen zweiten Reaktor (R2),
(c) Polymerisieren in dem zweiten Reaktor (R2) und in der Gegenwart des ersten Polypropylens (PP1) von Propylen und gegebenenfalls wenigstens einem von Ethylen und/oder $C_4$- bis $C_{20}$-$\alpha$-Olefin, um ein zweites

Polypropylen (PP2) zu erhalten, wobei das erste Polypropylen (PP1) und das zweite Polypropylen (PP2) eine (enge) Mischung bilden und das zweite Polypropylen (PP2) ein erstes Propylen-Homopolymer (H-PP1) oder ein zweites Random-Propylencopolymer (R-PP2) ist,
(d) Überführen der Mischung aus dem ersten Polypropylen (PP1) und dem zweiten Polypropylen (PP2) in einem dritten Reaktor (R3), und
(e) Polymerisation in dem dritten Reaktor (R3) und in Gegenwart der Mischung des ersten Polypropylens (PP1) und des zweiten Polypropylens (PP2) von Propylen und gegebenenfalls wenigstens einem von Ethylen und/oder $C_4$- bis $C_{20}$-$\alpha$-Olefin, um ein drittes Polypropylen (PP3) zu erhalten, wobei das dritte Polypropylen (PP3) ein zweites Propylen-Homopolymer (H-PP2) oder ein drittes Random-Propylencopolymer (R-PP3) ist und das erste Polypropylen (PP1), das zweite Polypropylen (PP2) und das dritte Polypropylen (PP3) eine (enge) Mischung bilden.

**15.** Verwendung eines Random-Propylencopolymers (R-PP) nach einem der vorhergehenden Ansprüche 1 bis 13 in Rohren.

**16.** Rohre, umfassend ein Random-Propylencopolymer (R-PP) nach einem der vorhergehenden Ansprüche 1 bis 13.

## Revendications

**1.** Copolymère de propylène statistique (R-PP) comprenant

(a) 15 à 35 % en poids d'un premier polypropylène (PP1) qui est un premier copolymère de propylène statistique (R-PP1), ledit premier copolymère de propylène statistique (R-PP1) présentant une teneur en comonomère située dans la plage allant de 2,5 à 12 % en poids et un indice de fluage $MFR_{10}$ (230°C), mesuré conformément à la norme ISO 1133, ne dépassant pas 1,5 g/10 min,
(b) 55 à 75 % en poids d'un deuxième polypropylène (PP2) qui est un premier homopolymère de propylène (H-PP1) ou un deuxième copolymère de propylène statistique (R-PP2), ledit deuxième polypropylène (PP2) présentant une teneur en comonomère ne dépassant pas 5,0 % en poids,
(c) 5 à 25 % en poids d'un troisième polypropylène (PP3) qui est un deuxième homopolymère de propylène (H-PP2) ou un troisième copolymère de propylène statistique (R-PP3), ledit troisième copolymère de propylène statistique(R-PP3) présentant une teneur en comonomère de 0,5 à 3,5 % en poids, dans lequel en outre

(i) le premier polypropylène (PP1) diffère du deuxième polypropylène (PP2) et du troisième polypropylène (PP3) par l'indice de fluage $MFR_2$ (230°C) et/ou par la teneur en [% en poids],
(ii) le deuxième polypropylène (PP2) diffère du troisième polypropylène (PP3) par l'indice de fluage $MFR_2$ (230°C) et/ou par la teneur en comonomère [% en poids],
(iii) le copolymère de propylène statistique (R-PP) présente un indice de fluage $MFR_2$ (230°C), mesuré conformément à la norme ISO 1133, de 0,05 à 10,00 g/10 min, et
(iv) le copolymère de propylène statistique (R-PP) présente une teneur en comonomère située dans la plage allant de 1,5 à 10 % en poids.

**2.** Copolymère de propylène statistique (R-PP) selon la revendication 1, dans lequel le premier polypropylène (PP1) qui est le premier copolymère de propylène statistique (R-PP1) présente

(a) un indice de fluage $MFR_2$ (230°C) inférieur à celui du deuxième polypropylène (PP2) et/ou du troisième polypropylène (PP3),
et/ou
(b) une teneur en comonomère [% en poids] supérieure à celle du deuxième polypropylène (PP2) et/ou du troisième polypropylène (PP3).

**3.** Copolymère de propylène statistique (R-PP) selon la revendication 1 ou 2, dans lequel

(a) le deuxième polypropylène (PP2) est un premier homopolymère de propylène (H-PP1) et le troisième polypropylène (PP3) est un troisième copolymère de propylène statistique (R-PP3),
ou
(b) le deuxième polypropylène (PP2) est un deuxième copolymère de propylène statistique (R-PP2) et le troisième polypropylène (PP3) est un deuxième homopolymère de propylène (H-PP2).

4. Copolymère de propylène statistique (R-PP) selon l'une quelconque des revendications précédentes, dans lequel soit le deuxième polypropylène (PP2) soit le troisième polypropylène (PP3) présente un indice de fluage $MFR_2$ (230°C) supérieur à 2,0 g/10 min.

5. Copolymère de propylène statistique (R-PP) selon l'une quelconque des revendications précédentes, lequel copolymère de propylène statistique (R-PP) présente

(a) un indice de fluidification par cisaillement SHI (0/50), mesuré conformément à la norme ISO 6271-10 (200°C), d'au moins 10
et/ou
(b) un point de fusion, déterminé par DSC, d'au moins 145°C.

6. Copolymère de propylène statistique (R-PP) selon l'une quelconque des revendications précédentes, lequel copolymère de propylène statistique (R-PP) présente

(a) une teneur en constituants solubles dans le xylène froid (XCS) ne dépassant pas 10,0 % en poids,
et/ou
(b) au moins 9 % en poids d'une fraction cristalline ayant une épaisseur de lamelle supérieure à 14,09 nm, ladite fraction étant déterminée par la technique de ségrégation isotherme séquentielle (SIST)
et/ou
(c) une courbe de fractionnement par élution avec augmentation de la température (TREF) ayant un maximum absolu supérieur à 110°C.

7. Copolymère de propylène statistique (R-PP) selon l'une quelconque des revendications précédentes, dans lequel le premier polypropylène (PP1) qui est le premier copolymère de propylène statistique (R-PP1) présente

a) une masse moléculaire moyenne en masse (Mw), mesurée par chromatographie d'exclusion diffusion (GPC), d'au moins 500 kg/mol,
et/ou
(b) un indice de fluage $MFR_{10}$ (230°C), mesuré conformément à la norme ISO 1133, situé dans la plage allant de 0,3 à 1,0 g/10 min,
et/ou
(c) une teneur en constituants solubles dans le xylène froid (XCS) ne dépassant pas 10,0 % en poids.

8. Copolymère de propylène statistique (R-PP) selon l'une quelconque des revendications précédentes, dans lequel le deuxième polypropylène (PP2) présente

(a) une masse moléculaire moyenne en masse (Mw), mesurée par chromatographie d'exclusion diffusion (GPC), située dans la plage allant de 150 à 550 kg/mol,
et/ou
(b) un indice de fluage $MFR_2$ (230°C) situé dans la plage allant de 0,4 à 5,0 g/10 min.

9. Copolymère de propylène statistique (R-PP) selon l'une quelconque des revendications précédentes, dans lequel le mélange du premier polypropylène (PP1) et du deuxième polypropylène (PP2) présente

(a) une teneur en comonomère située dans la plage allant de 0,5 à 5,0 % en poids,
et/ou
(b) un indice de fluidification par cisaillement SHI (0/50), mesuré conformément à la norme ISO 6271-10 (200°C), situé dans la plage allant de 10 à 35, et/ou
(c) un indice de fluage $MFR_2$ (230°C), mesuré conformément à la norme ISO 1133, situé dans la plage allant de 0,05 à 1,0 g/10 min, de préférence dans la plage allant de 0,05 à 1,0 g/10 min.

10. Copolymère de propylène statistique (R-PP) selon l'une quelconque des revendications précédentes, dans lequel le mélange du premier polypropylène (PP1) et du deuxième polypropylène (PP2) présente une teneur en constituants solubles dans le xylène froid (XCS) ne dépassant pas 8,0 % en poids.

11. Copolymère de propylène statistique (R-PP) selon l'une quelconque des revendications précédentes, dans lequel le troisième polypropylène (PP3) présente

(a) une teneur en comonomère ne dépassant pas 4,0 % en poids,
et/ou
(b) une masse moléculaire moyenne en masse (Mw), mesurée par chromatographie d'exclusion diffusion (GPC), située dans la plage allant de 300 à 50000 kg/mol,
et/ou
(c) un indice de fluage $MFR_2$ (230 °C) situé dans la plage allant de 0,001 à 10,0 g/10 min.

**12.** Copolymère de propylène statistique (R-PP) selon l'une quelconque des revendications précédentes, dans lequel le copolymère de propylène statistique (R-PP), le premier copolymère de propylène statistique (R-PP1), le deuxième polymère de propylène statistique (R-PP2) et le troisième polymère de propylène statistique (R-PP3) comprennent des motifs pouvant dériver

(a) de propylène
et/ou
(b) d'éthylène et/ou d'une $\alpha$-oléfine en $C_4$ à $C_{20}$.

**13.** Copolymère de propylène statistique (R-PP) selon l'une quelconque des revendications précédentes, dans lequel la quantité du premier polypropylène (PP1) est supérieure à la quantité du troisième polypropylène (PP3) dans le copolymère de propylène statistique.

**14.** Procédé pour la préparation d'un copolymère de propylène statistique selon l'une quelconque des revendications 1 à 13 selon un procédé de polymérisation séquentielle, lequel procédé comprend les étapes

(a) de polymérisation de propylène et d'au moins l'un parmi l'éthylène et/ou une $\alpha$-oléfine en $C_4$ à $C_{20}$ dans un premier réacteur (R1), ce qui donne un polypropylène (PP1) qui est un copolymère de propylène statistique (R-PP1), ledit polypropylène (PP1) présentant un indice de fluage $MFR_{10}$ (230°C), mesuré conformément à la norme ISO 1133, ne dépassant pas 1,5 g/10 min,
(b) de transfert du premier polypropylène (PP1) dans un deuxième réacteur (R2),
(c) de polymérisation, dans le deuxième réacteur (R2) et en présence dudit premier polypropylène (PP1), de propylène et éventuellement d'au moins l'un parmi l'éthylène et/ou une $\alpha$-oléfine en $C_4$ à $C_{20}$, ce qui donne un deuxième polypropylène (PP2), ledit premier polypropylène (PP1) et ledit deuxième polypropylène (PP2) formant un mélange (intime) et ledit deuxième polypropylène (PP2) étant un premier homopolymère de propylène (H-PP1) ou un deuxième copolymère de propylène statistique (R-PP2),
(d) de transfert du mélange du premier polypropylène (PP1) et du deuxième polypropylène (PP2) dans un troisième réacteur (R3), et
(e) de polymérisation, dans le troisième réacteur (R3) et en présence du mélange du premier polypropylène (PP1) et du deuxième polypropylène (PP2), de propylène et éventuellement d'au moins l'un parmi l'éthylène et/ou une $\alpha$-oléfine en $C_4$ à $C_{20}$, ce qui donne un troisième polypropylène (PP3), ledit troisième polypropylène (PP3) étant un deuxième homopolymère de propylène (H-PP2) ou un troisième copolymère de propylène statistique (R-PP3), et le premier polypropylène (PP1), le deuxième polypropylène (PP2) et le troisième polypropylène (PP3) formant un mélange (intime).

**15.** Utilisation d'un copolymère de propylène statistique (R-PP) selon l'une quelconque des revendications 1 à 13 dans des tuyaux.

**16.** Tuyaux comprenant un copolymère de propylène statistique (R-PP) selon l'une quelconque des revendications 1 à 13.

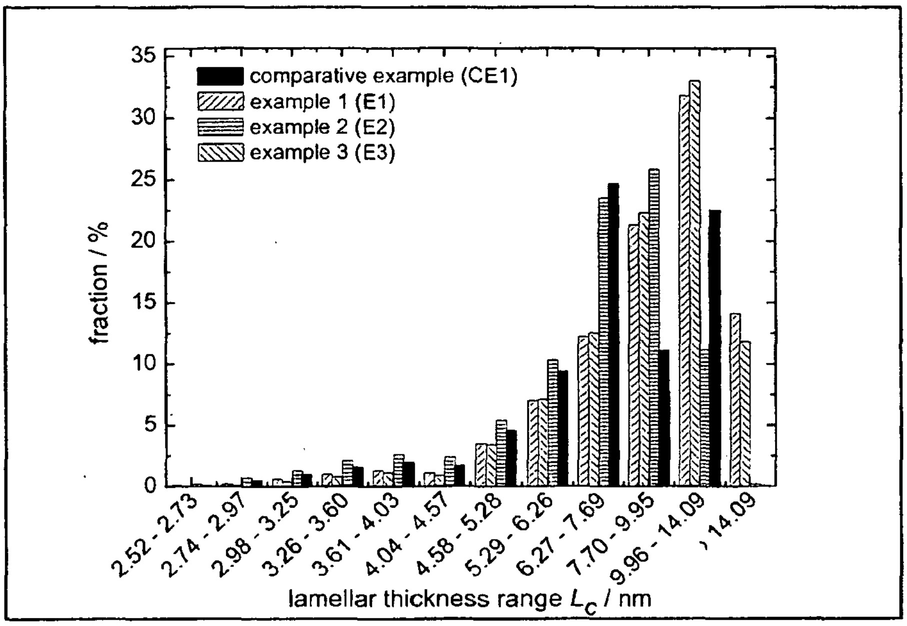


**Figure 1:** SIST

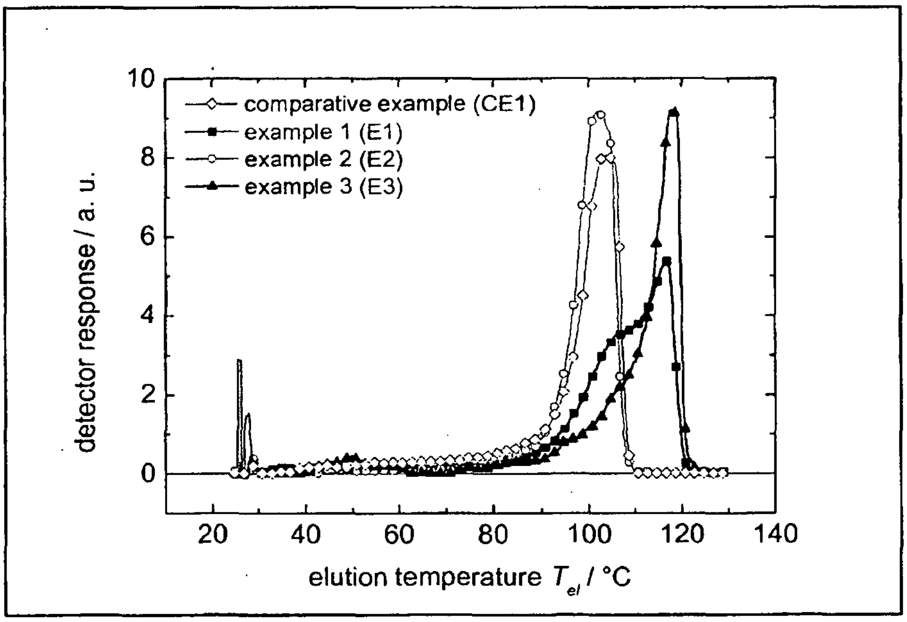


**Figure 2:** TREF

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1724289 A1
- US 6221974 B1
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A


### Non-patent literature cited in the description


- **P. VILLE et al.** *Polymer,* 2001, vol. 42, 1953-1967
- **T. HAYASHI ; Y. INOUC. R. CHÜJÖ ; T. ASAKURA.** *Polymer,* 1988, vol. 29, 138-43
- **CHUJO R et al.** *Polymer,* 1994, vol. 35, 339
- *Thermochimica Acta,* 1990, vol. 66, 53-68
- Rheological characterization of polyethylene fractions. **HEINO, E.L. ; LEHTINEN, A ; TANNER, J. ; SEPPÄLÄ.** Theor. Appl. Rheol., Proc. Int. Congr. Rheol. J. Neste Oy, 1992, vol. 1, 360-362
- The influence of molecular structure on some rheological properties of polyethylene. **HEINO, EEVA-LEENA.** Annual Transactions of the Nordic Rheology Society. Borealis Polymers Oy, 1995
- **J.B.P. SOARES ; A.E. HAMIELEC.** Temperature rising elution fractionation of linear polyolefins. *Polymer,* 1995, vol. 36 (8), 1639-1654
- Fractionation. **SOARES, J.B.P.** Encyclopedia Of Polymer Science and Technology. John Wiley & Sons, 2001, vol. 10, 75-131
- **N. AUST ; M. GAHLEITNER ; K. REICHELT ; B. RANINGER.** Optimization of run parameters of temperature-rising elution fractionation with the aid of a factorial design experiment. *Polymer Testing,* 2006, vol. 25 (7), 896-903